# Europäisches Patentamt

# European Patent Office

# Office européen des brevets

(19)

(11) Veröffentlichungsnummer: **0 200 093**
**B1**

(12)

# EUROPÄISCHE PATENTSCHRIFT

(45) Veröffentlichungstag der Patentschrift:
**12.10.88**

(51) Int. Cl.⁴: **C 08 G 65/46**

(21) Anmeldenummer: **86105251.2**

(22) Anmeldetag: **16.04.86**

(54) **Verfahren zur Isolierung von aromatischen Polyethern.**

(30) Priorität: 26.04.85 DE 3515138

(43) Veröffentlichungstag der Anmeldung:
**05.11.86 Patentblatt 86/45**

(45) Bekanntmachung des Hinweises auf die Patenterteilung:
**12.10.88 Patentblatt 88/41**

(84) Benannte Vertragsstaaten:
**DE FR GB IT NL**

(56) Entgegenhaltungen:
**EP-A-0 116 442**
**DE-A-1 570 469**
**DE-A-2 460 323**
**DE-A-2 746 420**
**US-A-3 532 677**

(73) Patentinhaber: **Röhm GmbH, Kirschenallee**
**Postfach 4242, D-6100 Darmstadt 1 (DE)**

(72) Erfinder: **Siegert, Hermann, Dr., Burkhardtstrasse**
**38, D-6104 Seeheim- Ingenheim (DE)**
Erfinder: **Ude, Werner, Dr., Birngartenweg 115,**
**D-6100 Darmstadt (DE)**

## Beschreibung

### Gebiet der Erfindung

Die vorliegende Erfindung betrifft ein Verfahren zur Isolierung von aromatischen Polyethern als Festprodukte aus ihren Lösungen.

### Stand der Technik

Aromatische Polyether sind polymere Verbindungen, bei denen die Struktureinheiten der Polymerketten u.a. aus bivalent mit Aryleneinheiten verknüpften Sauerstoffatomen aufgebaut sind, und diese aromatischen Ethergruppen Teile der Hauptkette bilden. Solche aromatischen Polyether sind vielfach bekannt und finden z.T. auch Verwendung als Werkstoffe. Hier sind insbesondere das durch oxidative Kupplung von 2,6-Di-methylphenol erhaltene Polymere, das als PPO bekannt ist und Polyethersulfone, wie sie z. B. unter den Handelsnamen "Polyethersulfon 200 P" und "Udel" ® auf dem Markt sind, zu nennen. Aromatische Polyetherketone sind z. B. aus der EP-A-1 879 bekannt und können z. B. durch Polykondensation von 4,4'-Difluorbenzophenon mit Hydrochinon oder 4,4'-Dihydroxidiphenylether oder 2,2-Bis-(4-hydroxiphenyl)propan, besonders bekannt unter dem Namen Bisphenol A, erhalten werden. Polyether, die noch Phosphor in den Struktureinheiten der Polymerkette enthalten, sind in der DE-OS-3 203 186 beschrieben und werden durch Polykondensation von bifunktionellen Ausgangsverbindungen wie Arylendiolen mit Di- (halogenphenyl)-phenylphosphinen oder den entsprechenden Phosphinoxiden hergestellt. Die Polykondensation wird vorwiegend in Lösung durchgeführt, wozu beispielsweise für die Herstellung der phosphorhaltigen Polyarylenether N-Methylpyrrolidon als Lösungsmittel geeignet ist. Zur Erreichung hoher Molekulargewichte werden Lösungsmittel als Reaktionsmedien verwendet, die sowohl die monomeren Ausgangsstoffe als auch das entsprechende Polykondensat lösen können. Lösungsmittel, die meist diesen Anforderungen entsprechen, sind polare, hochsiedende Substanzen, wie beispielsweise Dimethylformamid, Dimethylacetamid, N-Methylpyrrolidon, Diphenylsulfon oder Sulfolan, aber auch das relativ niedrig siedende Methylenchlorid. Die Verwendung solcher Medien ist bei der Herstellung der Polymeren sehr vorteilhaft, da dadurch die Viskosität der Reaktionsmischungen herabgesetzt und ihre Polarität erhöht wird, was zur Erzielung eines hohen Umsatzes und damit zur Erhöhung des Molekulargewichtes notwendig ist.

Der technisch interessante Molekulargewichtsbereich der für eine Weiterverarbeitung zu Gebrauchsstücken verwendeten aromatischen Polyether liegt höher 10.000. So werden beispielsweise aus 2,6-Dimethylphenol Polymere mit Molekulargewichten um 100.000 erhalten, und die phosphorhaltigen Polyarylenether haben nach Angaben der DE-OS-3 203 166 Molekulargewichte von mindestens 10.000, vorzugsweise 15.000 bis 500.000.

Das Polymere kann aus der Reaktionsmischung durch Abdestillieren des Lösungsmittels als Festprodukt erhalten werden, oder es wird meist durch Mischen des Reaktionsansatzes mit einer Flüssigkeit ausgefällt. So wird nach B. Vollmert, Grundriß der Makromolekularen Chemie, E. Vollmert-Verlag, Karlsruhe, 1980, Bd. II, Seite 31, aus der viskosen Lösung der PPO-Synthese das PPO durch Methanol ausgefüllt. Nach der DE-OS-3 203 186 werden die phosphorhaltigen Polyether aus ihren bei den Synthesen erhaltenen Lösungen mit Methanol-Wasser-Gemischen ebenfalls ausgefällt.

### Problem, Aufgabe und Lösung

Die bisher zur Fällung von aromatischen Polyethern benutzten Flüssigkeiten haben verschiedene Nachteile, z. B. eine hohe Verdampfugsenthalpie; sie beträgt für Methanol 1101,39 und für Wasser 2257,22 kJ/kg am entsprechenden Siedepunkt.

Die hohe Verdampfungsenergie belastet die notwendige destillative Aufarbeitung des Reaktionsmedium-Fällungsmittel-Gemisches mit hohen Kosten. Weiterhin ist meist die Ausfällung mit den dafür gebräuchlichen Flüssigkeiten wenig selektiv, so daß sie nicht zur gewünschten Reinheit und Fraktionierung des gefällten Produktes führt. So werden z. B. Oligomere, d.h. Polykondensate mit Molekulargewichten kleiner 10.000, die die Polymerisateigenschaften ungünstig beeinflussen, nicht vollständig abgetrennt.

Aufgabe der vorliegenden Erfindung war es, ein Verfahren zur Isolierung von aromatischen Polyethern durch Fällung aus Lösungen aufzuzeigen, bei dem Fällungsmittel verwendet werden, die bei der weiteren Aufarbeitung von dem Reaktionsmedium oder bei Umfällungsverfahren von dem verwendeten Lösungsmittel wieder leicht und kostengünstig zurückzugewinnen sind, und die bei der Fällung zur Fraktionierung des Reaktionsproduktes beitragen.

Es wurde überraschenderweise gefunden, daß sich die genannten Probleme dadurch lösen lassen, daß die Abtrennung aromatischer Polyether aus ihren Lösungen durch Ausfällung mit bestimmten Fluorkohlenwasserstoffen durchgeführt wird.

## Vorteile der Erfindung

Durch die Verwendung von Fluorkohlenwasserstoffen mit 1 bis 4 Kohlenstoffatomen, die gegebenenfalls noch Chlor- und/oder Bromatome und keine bis höchstens 4 Wasserstoffatome im Molekül tragen, als Fällungsmittel bei der Isolierung von Polyethern, wird die Aufgabe sowohl hinsichtlich der Forderung einer niedrigen Verdampfungsenthalpie als auch der nach einer Abtrennung der Oligomeren erfüllt. Die Verdampfungswärmen der für die Durchführung der Erfindung in Betracht kommenden, gegebenenfalls noch Chlor und/oder Brom enthaltende Fluorkohlenwasserstoffe, die gesättigt oder ungesättigt sein können, liegen am Siedepunkt dieser Verbindungen im Bereich von 150 ± 30 kJ/kg. Bezogen auf die vergleichbare Methanolmasse bedeutet dies, daß bei der Aufarbeitung des Reaktionsmediums bzw. Lösungsmittel-Fällungsmittel-Gemisches nach dem erfindungsgemäßen Vorgehen nur etwa 1/6 bis 1/9 der Verdampfungsenergie aufzuwenden ist, wie beim Arbeiten mit Methanol als Fällungsmittel. Im Vergleich mit Wasser, das nach dem Stand der Technik Teil des Fällungsmittels sein kann, erniedrigt sich die Verdampfungsenergie, auf gleiche Massen bezogen, weiter auf etwa 1/12 bis 1/18.

Es wurde weiter gefunden, daß durch das neue Verfahren nur die hochmolekularen Anteile des Reaktionsproduktes ausgefällt werden, während die Oligomeren in Lösung bleiben. Diese werden nach Abtrennung des Fällungsmittels mit dem polaren Lösungsmittel einer neuen Polykondensation zugeführt. Dieser besondere Vorteil des neuen Verfahrens, nämlich die Reinigung des Polymeren durch Abtrennung von oligomeren Anteilen bei der Gewinnung des Polyethers, zeigt sich schon in der Beschaffenheit des Fällungsproduktes. Während bei der Verwendung von Methanol und/oder Wasser als Fällungsmittel das Reaktionsprodukt wegen seines Gehaltes an relativ niedrigmolekularen Polykondensationsprodukten meist in klebriger Form anfällt und dann einer weiteren Reinigungsoperation unterzogen werden muß, fällt das Polymere - wie weiter gefunden wurde - bei der Ausfällung mit Fluorchlorbromkohlenwasserstoffen in einer nichtklebrigen pulvrig-flockigen Form an. In dieser Form läßt sich das Polymere z. B. durch Filtration leicht von der flüssigen Phase abtrennen, nötigenfalls waschen und trocknen und ist so für die Weiterverarbeitung gut handhabbar. Die erfindungsgemäße Verwendung der hoch halogenierten Chlorfluorkohlenwasserstoffe bei der Gewinnung der Polymeren durch Ausfällung bringt darüber hinaus den Vorteil der Nichtbrennbarkeit dieser Substanzen gegenüber Methanol und anderen Fällungsmitteln, wie z. B. Kohlenwasserstoffen, und sie zeichnen sich durch hohe physiologische Verträglichkeit aus.

## Ausführung der Erfindung

Für die Durchführung des erfindungsgemäßen Verfahrens kommen Fluorkohlenwasserstoffe mit 1 bis 4 Kohlenstoffatomen, gegebenenfalls noch Chlor und/oder Bromatome und mit keinem oder höchstens 4 Wasserstoffatomen im Molekül in Betracht. Die Dielektrizitätskonstante DK der hier als Fällungsmittel in Frage kommenden Fluorkohlenwasserstoffe, die weiter noch mit Chlor und/oder Brom halogeniert sein können, ist kleiner 7 (gemessen als Flüssigkeit bei 25 Grad C); zur Messung siehe z. B. Ullmann's Encyclopädie der technischen Chemie 2/1, Seiten 460 - 463, 3. Auflage. Geeignet sind beispielsweise 1,1,2-Trichlor-1,2,2-trifluoräthan, 1,2-Dichlortetrafluoräthan, 1,2-Dibromtetrafluoräthan, 2-Chlorl-1,1,1-trifluor-2-bromäthan und Oktafluorcyclobutan, sowie ungesättigte Fluorkohlenwasserstoffe wie z. B. 2,2-Dichlordifluoräthylen oder 1-Chlor-2,2-difluoräthylen.

Auch Gemische von Fluorkohlenwasserstoffen können bei dem Verfahren eingesetzt werden. Vorteilhaft zu verwendende Fluorkohlenwasserstoffe haben Siedepunkte, die im Bereich von -30 bis 100 Grad C liegen.

Die Ausfällung des Polyethers aus seiner Lösung wird bei Temperaturen in Abhängigkeit vom Siedepunkt des eingesetzten Fluorkohlenwasserstoffs durchgeführt. Im allgemeinen ist dies der Bereich von etwa 0 bis 120 Grad C. Wegen der relativ niedrigen Siedepunkte der Fällungsmittel ist es vielfach auch notwendig, die Fällung in einem Druckbehälter, z. B. einem geschlossenen Rührkessel und Einleiten des Fällungsmittels in gasförmiger Form durchzuführen. Zur Vermeidung von Klumpenbildung wird die Fällung vorteilhaft unter Rühren und kontinuierlicher Zugabe des Fällungsmittels vorgenommen. Wenn notwendig, kann auch umgekehrt verfahren werden, daß die Polymerlösung in vorgelegten Fluorkohlenwasserstoff eingetragen wird.

Die Konzentration der Lösung an aromatischem Polyether kann in weiten Bereichen, beispielsweise von etwa 1 bis ca. 50 Gew.-% liegen und hängt insbesondere vom Molekulargewicht des Polymeren ab, wodurch wiederum die Viskosität der Lösung und damit ihre Handhabung bestimmt werden. Für die Ausfällung des Polymeren wird das Fällungsmittel etwa in Mengen von 10 bis 150 Teilen pro Teil gelöstem Polyether angewandt. Die Menge des Fällungsmittels richtet sich hierbei auch nach dem spezifischen Lösungsvermögen des Lösungsmittels für das Polymerisat und nach dem angestrebten Fraktionierungsgrad.

Der in pulvrig-flockiger Form ausgefallene Polyether kann beispielsweise durch Filtration oder durch Siebschleudern vom flüssigen Medium getrennt, gegebenenfalls vorteilhaft mit dem angewendeten Fällungsmittel nachgewaschen und anschließend getrocknet werden.

Der Fluorkohlenwasserstoff als Fällungsmittel läßt sich vom polaren Lösungsmittel bzw. Reaktionsmedium in einfacher Weise mit relativ geringem Energieaufwand durch Destillation abtrennen und zurückgewinnen. Im Destillationsrückstand sind noch oligomere Kondensationsanteile gelöst, die mit dem Lösungsmittel einer neuen Polykondensation zugeführt werden.

**Beispiel 1**

342,5 g (1,5 Mol) Bisphenol A, 327,0 g (1,5 Mol) 4,4'-Difluorbenzophenon, 220,0 g (1,6 Mol) Kaliumcarbonat, 2270 g N-Methylpyrrolidon und 750 g Chlorbenzol wurden in einem 6 l-Vierhalskolben mit KPG-Rührer, Tropftrichter und Claisenaufsatz mit Liebig-Kühler zum Sieden erhitzt. Man destillierte nun ein Chlorbenzol/Wasser-Gemisch soweit wie möllich ab. Anschließend wurden weitere 750 g Chlorbenzol zur Reaktionsmischung getropft und gleichzeitig abdestilliert. Die Reaktionsmischung wurde nun 15 h bei 160° C gehalten und die Kondensation anschließend durch Einblasen von Methylchlorid bei dieser Temperatur abgebrochen. Man gab nun 100 ml N-Methylpyrrolidon in den Reaktionskolben und saugte den Kolbeninhalt über eine grobporige Glasfritte. Der Rückstand in der Mitte wurde mit 70 ml N-Methylpyrrolidon nachgewaschen.

5 g des Filtrats (≙ 1 g Polykondensat) wurden nun zur Ausfüllung des Polyethers verwendet. Dazu wurden 100 ml 1,1,2-Trichlor-1,2,2-trifluorethan (z. B. Frigen 113®, Hoechst) in einem Witt'schen Topf (250 ml) mit einem Blattrührer bei Raumtemperatur so stark wie möglich gerührt und die Lösung des Polykondensats langsam inneralb ca. 15 min zugetropft. Anschließend rührte man noch ca. 15 min nach, saugte den ausgefallenen, flockigen Polyether ab und wusch mit 20 ml 1,1,2-Trichlor-1,2,2-trifluorethan nach. Man erhielt nach dem Trocknen 0,75 g Polykondensat.

**Beispiel 2**

60 g der in Beispiel 1 beschriebenen Lösung des Polyethers aus 4,4'-Difluorbenzophenon und Bisphenol A (≙ 12 g Polykondensat) wurden, wie in Beispiel 1 beschrieben, in 600 ml 1,1,2-Trichlor-1,2,2-trifluorethan eingetropft. Anschließend wurde noch 15 min nachgerüht. Die Füllung wurde abgesaugt und nochmals mit ca. 200 ml Fällungsmittel nachgewaschen. Die flockige Fällung wird zunächst bei Raumtemperatur, anschließend bei 90° C i. Vak. bis zur Gewichtskonstanz getrocknet.

Man erhielt 10 g Polykondensat.

**Beispiel 3**

5 g eines aus Bisphenol A und 4,4'-Difluorbenzophenon hergestellten Polyethers wurden in 45 g Dichlormethan gelöst. 25 g dieser Lösung wurden bei ca. 20° C unter intensivem Rühren in 500 ml Frigen 113® (1,1,2-Trichlor-1,2,2-trifluorethan) eingetropft. Anschließend wurde noch 15 min nachgerührt. Die erhaltene weiße, voluminöse, flockige, nicht klebrige Fällung wurde abgesaugt, mit ca. 100 ml des Fällungsmittels nachgewaschen und anschließend bei 60° C bis zur Gewichtskonstanz getrocknet. Man gewann 3,5 g des eingesetzten Polykondensats wieder.

**Beispiel 4**

10 g eines Polykondensats aus 4,4'-Difluortriphenylphosphinoxid und Bisphenol A wurden in 50 ml N-Methylpyrrolidon gelöst und diese Lösung langsam unter gutem Rühren in 700 ml 1,1,2-Trichlor-1,2,2-trifluorethan eingetropft. Man rührte danach noch 30 min. Anschließend wurde die Füllung abgesaugt und der Filterrückstand mit ca. 100 ml Fällungsmittel nachgewaschen. Die flockige Fällung wurde i. Vak. bei 100° C bis zur Gewichtskonstanz getrocknet (7,5 g Ausbeute). Daraus wurde eine flexible Gießfolie hergestellt.

Aus dem Filtrat wurde der Fluorchlorkohlenstoff durch Destillation zurückgewonnen und das noch polykondensationshaltige N-Methylpyrrolidon einem neuen Polykondensationsansatz zugeführt.

**Beispiel 5**

2 g eines Polykondensats aus Bisphenol A und 4,4'-Dichlordiphenyl-sulfon wurden in 15 g Dimethylacetamid gelöst.

Diese Lösung wurde zu 300 ml Bromchloridfluormethan (Frigen 12Bl® Kp: - 4° C) in einem 1 l-Glasautoklaven unter intensivem Rühren bei etwa 20° C langsam getropft. Der sich einstellende Druck im Reaktionsgefäß betrug ca. 2,5 bar. Anschließend rührte man noch 15 min nach und saugte dann die flüssige Phase über eine grobe Fritte in einen mit Aceton /Trockeneis gekühlten 1 l-Kolben mit Abluftleitung ab. Das ausgefällte Polykondensat wurde mit Bromchlordifluormethan nachgewaschen. Nach dem Trocknen bei 70° C im Vakum bis zur Gewichtskonstanz wurde 1,7 g flockiges Polykondensat erhalten.

## Beispiel 6

5 g eines Polykondensats aus Bisphenol A und 4,4'-Difluorbenzophenon wurden in 25 g wasserfreiem Tetrahydrofuran gelöst. Diese Lösung wurde bei 0° C unter gutem Rühren in 300 ml Trichlorfluormethan (Frigen 11®, Kp: 23° C) langsam eingetropft. Anschließend wurde 20 Min nachgerührt. Die gebildete weiße, flockige Fällung wurde von der Flüssigkeit durch Absaugen in ein gekühltes Gefäß befreit, mit auf 0° C gekühltem Fällungsmittel (Ca. 50 ml) nachgewaschen und anschließend bei 80° C im Vakuum bis zur Gewichtskonstanz getrocknet. Erhalten wurden 4 g des Polykondensats.

## Beispiel 7

2 g einer Lösung eines Polyethers aus Bisphenol A und 4,4'-Difluorbenzophenon in 10g 1,3-Dimethyl-3,4,5,6-tetrahydro-2(1H)-pyrimidinon wurden wie im Beispiel 5 beschrieben, mit dem Unterschied, daß als Fällungsmedium ca. 100 ml eines 1 : 1-Gemisches (Vol-Verh.) aus Dichlortetrafluorethan und Trichlortrifluorethan (Frigen 114® Kp: 3° C und Frigen 113® Kp: 47°C) verwendet wurde.
Erhalten wurden 1,5 g des Polyethers.

## Patentansprüche

1 .Verfahren zur Isolierung von aromatischen Polyethern als Festprodukte aus Lösungen durch Zusatz von Fällungsmitteln,
dadurch gekennzeichnet,
daß als Fällungsmittel ein Fluor-Kohlenwasserstoff mit 1 bis 4 Kohlenstoffatomen, mit gegebenenfalls noch Chlor- und/oder Bromatomen und mit keinen oder höchstens 4 Wasserstoffatomen im Molekül, der gesättigt oder ungesättigt sein kann, eingesetzt wird.

2. Verfahren gemäß Anspruch 1, dadurch gekennzeichnet, daß als Fällungsmittel ein Fluor-Kohlenwasserstoff verwendet wird, dessen Siedepunkt bei Normaldruck im Bereich von -30 bis +100° C liegt.

3. Verfahren gemäß den Ansprüchen 1 oder 2, dadurch gekennzeichnet, daß die Fällung bei Temperaturen im Bereich von -30 bis +120° C durchgeführt wird.

4. Verfahren gemäß den Ansprüchen 1 bis 3, dadurch gekennzeichnet, daß die Fällung unter Druck durchgeführt wird.

5. Verfahren gemäß den Ansprüchen 1 bis 4, dadurch gekennzeichnet, daß als Fällungsmittel ein Gemisch von Fluor-Kohlenwasserstoffen eingesetzt wird.

## Claims

1. Process for isolating aromatic polyethers as solid products from solutions by the addition of precipitating agents, characterised in that a fluorohydrocarbon with 1 to 4 carbon atoms, and optionally with chlorine and/or bromine atoms and with no or at most 4 hydrogen atoms in the molecule, which may be saturated or unsaturated, is used as the precipitating agent.

2. Process as claimed in claim 1, characterised in that a fluorohydrocarbon the boiling point of which under normal pressure is in the range from -30 to +100° C is used as the precipitating agent.

3. Process as claimed in claim 1 or 2, characterised in that the precipitation is carried out at temperatures in the range from -30 to +120° C.

4. Process as claimed in claims 1 to 3, characterised in that the precipitation is carried out under pressure.

5. Process as claimed in claims 1 to 4, characterised in that a mixture of fluorohydrocarbons is used as precipitating agent.

## Revendications

1. Procédé d'isolement de polyéthers aromatiques, sous forme de produit solide, d'avec des solutions par addition d'agents précipitants, caractérisé en ce qu'on utilise, comme agent précipitant, un hydrocarbure fluoré à 1 - 4 atomes de carbone qui comporte en outre, le cas échéant, des atomes de chlore et/ou de brome et de 0 à 4 atomes d'hydrogène au maximum dans la molécule et qui peut être saturé ou insaturé.

2. Procédé selon la revendication 1, caractérisé en ce qu'on utilise, comme agent précipitant, un hydrocarbure fluoré dont le point d'ébullition à la pression normale se situe dans la gamme de -30 à +100° C.

3. Procédé selon la revendication 1 ou 2, caractérisé en ce que la précipitation est conduite à des températures dans la gamme de -30 à +120° C.

4. Procédé selon l'une quelconque des revendications 1 à 3, caractérisé en ce que la précipitation est conduite sous pression.

5. Procédé selon l'une quelconque des revendications 1 à 4, caractérisé en ce qu'on utilise, comme agent précipitant, un mélange d'hydrocarbures fluorés.